# DEMANDE DE BREVET EUROPEEN

(11) **EP 1 214 966 A1**
(43) Date de publication de la demande: **19.06.2002**
(21) Numéro de dépôt: 00870303.5
(22) Date de dépôt: 15.12.2000
(51) Int. Cl.: B01D 53/86

(54) **Dispositif et procédé d'épuration de gaz**

(71) Demandeur: UNIVERSITE CATHOLIQUE DE LOUVAIN, 1348 Louvain la Neuve (BE)
(72) Inventeur: Kartheuser, Benoît, 5590 Ciney (BE); May, Bronislav Henri, 3090 Overijse (BE); Després, Jean-François, 1348 Louvain La Neuve (BE)
(74) Mandataire: Bird, Ariane

(57) **Abrégé**

Dispositif pour l'épuration d'un flux gazeux comprenant :
- un réacteur comprenant au moins une entrée pour le gaz à épurer et au moins une sortie pour le gaz épuré,
- au moins une source de rayonnement ultraviolet ou visible, et
- au moins un élément de support apte à être revêtu d'un catalyseur capable d'oxyder au moins partiellement les impuretés contenues dans le gaz sous l'action de rayonnement ultraviolet ou visible, ledit élément de support étant disposé à l'intérieur du réacteur.

Ledit (lesdits) élément(s) de support est (sont) disposé(s) par rapport à la source de rayonnement ultraviolet ou visible et/ou par rapport à la direction du flux gazeux de manière à oxyder, en présence du catalyseur, 90% d'une impureté-modèle constituée d'acétone à une vitesse d'au moins 300 µmoles d'impureté-modèle par heure, par watt de puissance de la source et par mètre carré de surface d'élément de support illuminé par la source.

Application à la désinfection et à la dépollution de l'air et des gaz industriels.

## Description

La présente invention se rapporte à un procédé et un dispositif pour l'épuration d'effluents gazeux et à un dispositif pour la mise en oeuvre de ce procédé. Plus généralement, l' invention se rapporte au domaine de la décontamination des gaz, en particulier la purification et la dépollution de l'air.

### ETAT DE LA TECHNIQUE

Il existe un besoin pressant et universel pour éliminer les polluants de l'air de manière rapide, sûre et économique. Par polluants on entend ici des contaminants, notamment gazeux, dont le caractère indésirable peut être dû à la nocivité (toxicité) pour la santé de l'organisme humain ou animal ou pour le bon maintien des lieux dans lesquels, même occasionnellement, l'homme ou l'animal subsiste ou dans lesquels l'homme entrepose des matériaux en vue de leur utilisation ultérieure, auquel cas on pourra parler de désinfection. Ce caractère indésirable peut aussi être attribué à des considérations de confort de la vie humaine, les décontaminants gazeux n'étant pas à proprement parler nocifs mais pouvant être très déplaisants par leur odeur, auquel cas on pourra parler de désodorisation.

Pour traiter ce problème on est à la recherche de moyens ayant la capacité de détruire complètement, dans un effluent gazeux tel que l'air, toute molécule à base d'hydrogène, de carbone et le cas échéant d'oxygène et/ou d'hétéroatomes tels que soufre et azote, telle que solvant hydrocarboné et/ou halogéné, protéine, virus, bactérie, essence de parfum, moisissure, pesticide, bactériophage, etc.

A cet effet il a été proposé d'avoir recours à un traitement de minéralisation (c'est-à-dire de destruction complète par oxydation) de contaminants de l'air, en particulier de composés organiques volatils, par photocatalyse sous rayonnement ultraviolet (ci-après UV) ou visible sur dioxyde de titane. L'intérêt de ce principe a été largement démontré. La réaction s'effectue à température et à pression ambiante, dans des réacteurs utilisant des matériaux de construction courants. Elle peut exploiter des sources de rayonnement UV ou visible de structure simple et peu onéreuse, peu consommatrices d'énergie, en utilisant l'oxygène de l'air comme agent d'oxydation principal, les moyens d'illumination ayant pour fonction d'activer les particules photocatalytiques. La réaction peut minéraliser complètement la plupart des composés organiques volatils, y compris ceux comprenant des hétéroatomes. L'analyse économique publiée par C.S.Turchi et al. dans leur rapport présenté à *Advanced oxidation technologies for water and air remediation*, London, Ontario, Canada (juin 1994) montre que la photocatalyse présente l'avantage d'un dessin modulaire et est d'un intérêt particulier dans le traitement d'effluents gazeux faiblement pollués (c'est-à-dire dont le taux de contaminants ne dépasse pas environ 1.000 ppm en volume) et à des débits de gaz moyens ne dépassant pas environ 34.000 m³/h. Ces conditions constituent le domaine par excellence du traitement de l'air dans des milieux confinés mal ventilés tels que les habitations, les véhicules de transport sur route (automobiles, camions), sur rail (trains) et dans les airs (avions), les élevages d'animaux, les zones d'entreposage, les armoires frigorifiques domestiques et industrielles, etc. ainsi que du traitement des effluents de réacteurs chimiques ou biologiques.

Concernant le mécanisme d'oxydation du traitement photocatalytique d'un gaz, il est admis que l'incidence sur le dioxyde de titane (dans sa forme anatase) de photons d'une énergie suffisante dans le domaine des longueurs d'onde inférieures à 400 nm permet d'éjecter un électron de la bande de valence du semiconducteur vers sa bande de conduction et de créer ainsi un trou positif suffisamment stable et mobile, qui en émergeant à la surface de l'oxyde permet de créer, au contact de composés oxygénés gazeux (tels que la vapeur d'eau, l'oxygène ou l'ozone) adsorbés, des radicaux libres extrêmement oxydants, largement responsables des réactions observées.

Ces constatations ont naturellement conduit à la conception d'une multitude de systèmes en vue de l'exploitation pratique des propriétés du dioxyde de titane, de ses analogues et de ses composés dérivés. Les améliorations recherchées ont le plus souvent porté sur le matériau photocatalytique, le photoréacteur, les sources UV, la chloration de la surface de dioxyde de titane, l'emploi d'air ozoné, etc. Quelques exemples de tels éléments de la littérature sont fournis ci-après à titre illustratif. Ainsi, N.Takeda et al. décrivent dans *Bull. Chem. Soc. Jpn.* (1999) 72 :1615-1621 l'effet de la mordenite en tant que matériau de support du dioxyde de titane sur la vitesse de photodégradation de propionaldehyde, acétone ou propane gazeux, la concentration initiale de chaque polluant étant fixée à 130 µmole par litre d'air. Les résultats obtenus montrent, pour le catalyseur supporté, qu'il est possible de réduire de 90% la concentration d'acétone en 2,5 heures, celle du propane en 2 heures et celle du propionaldehyde en 0,25 heure. Compte tenu de la masse de catalyseur engagée, du volume du réacteur, de la surface de plaque supportant le catalyseur exposée à la lumière de la source et de la puissance de celle-ci, différentes expressions de la vitesse d'oxydation peuvent être calculées comme suit à partir de ces résultats :

| Polluant | µmole/h/W/g_{cata} | µmole/h/W/m² | µmole/h/W |
|---|---|---|---|
| Acétone | 17,5 | 175 | 0,07 |
| Propane | 22 | 220 | 0,088 |
| Propionaldéhyde | 175 | 1750 | 0,702 |

M.Sauer et al. décrivent dans *Journal of Catalysis* (1994) 149:81-91 l'oxydation photocatalysée de l'acétone dans l'air selon une vitesse de 0,29 µmole/h/W. La demande de brevet WO 99/24277 montre aussi une réduction d'environ 85% de la concentration d'acétone en présence d'anatase après 30 heures, correspondant à une vitesse de 0,228 µmole/h/W ou encore 47 µmole/h/W/m². Yu et al. ont aussi divulgué dans *J.Phys. Chem. B* (1998) 102 :5094-7 la dégradation de l'acétone en présence d'une solution solide de formule Ti₁₋ₓZrₓO₂ montrant une vitesse initiale de 40 µmole/h/W/g_{cate} ou encore 0,4 µmoles.m²/h/W/g_{cata} pendant la première demi-heure, temps au bout duquel toutefois la réduction de concentration ne dépassait pas 3,4%. Ces publications montrent que l'acétone est largement accepté en tant que composé-modèle pour l'étude des paramètres d'une réaction d'oxydation photocatalytique hétérogène gaz-solide.

De manière très générale, un dispositif d'épuration de gaz par oxydation photocatalytique comprend :
- un réacteur comprenant au moins une entrée pour le gaz à épurer et au moins une sortie pour le gaz épuré,
- au moins une source de rayonnement ultraviolet ou visible, et
- au moins un élément de support apte à être revêtu d'un catalyseur capable d'oxyder au moins partiellement les impuretés contenues dans le gaz sous l'action de rayonnement ultraviolet ou visible, ledit élément de support étant disposé à l'intérieur du réacteur.

Le brevet U.S. n° 5.790.934 décrit plusieurs modes de réalisation d'un réacteur destiné à la purification photocatalytique de fluide, comprenant soit une surface plissée en forme d'étoile sur laquelle est déposée le catalyseur soit un grand nombre d'ailettes revêtues de catalyseur, ces différents modes ayant en commun que le flux gazeux est dirigé parallèlement aux plans des supports catalytiques. Par ailleurs, la demande de brevet japonais n° 55-116433 divulgue, pour une réaction photochimique, non précisée, d'un système monophasique (gazeux ou liquide) en présence de lumière UV, visible ou infrarouge, l'emploi d'un réacteur (représenté aux figures 1 et 2 de ce document) dans lequel les palettes, autour desquelles serpente le fluide de réaction, ne supportent pas de catalyseur et, étant transparentes et disposées dans la direction des rayons lumineux pour éviter la dispersion et l'absorption de lumière, ne peuvent être prévues à cet effet. Ce dernier document précise en outre que la réaction est uniforme et sans désordre de flux, c'est-à-dire procède de manière homogène et sans turbulence. La demande de brevet japonais n° 11-342317 décrit un dispositif de désinfection de l'air comportant une section d'entrée dans laquelle le gaz à traiter se dilate en abaissant sa vitesse avant de pénétrer dans une zone réactionnelle comprenant des canaux horizontaux séparés par des plaques ondulées, recouvertes de dioxyde de titane, de faible convexité créant une certaine turbulence sur le chemin desquelles sont disposées des sources de photoirradiation transversales au flux de gaz. Ce dispositif est efficace pour le traitement de vapeur d'eau contenant de très faibles concentrations (jusqu'à 10 ppm) de composés organiques tels que triméthylamine ou méthylmercaptan.

Plusieurs problèmes restent néanmoins à résoudre pour décontaminer un effluent gazeux (en ce compris la désinfection et la désodorisation), en particulier pour éliminer les polluants de l'air, de manière rapide et économique en utilisant les principes de la photocatalyse. En particulier, un premier problème réside dans la limitation de la surface active de photocatalyseur effectivement accessible à la fois à la lumière incidente et aux gaz, en raison de la porosité habituelle du type de catalyseur utilisé. Un second problème réside dans la compétition des contaminants organiques pour les sites actifs, notamment lorsque les pores sont très petits. Concernant ce dernier paramètre, on note dans la littérature l'emploi de formes de catalyseur ayant des surfaces spécifiques allant d'environ 12 m²/g à environ 340 m²/g, et même jusqu'à 2000 m²/g dans le cas d'aérogels de silice.

L'un des buts de la présente invention consiste à résoudre les problèmes techniques précités en proposant un dispositif d'épuration de gaz par photocatalyse dont l'efficacité par unité de temps et par unité de puissance lumineuse, et le cas échéant par unité de surface catalytique exposée (illuminée), soit significativement supérieure à celle des dispositifs connus à ce jour. Un autre but de la présente invention consiste à résoudre les problèmes techniques précités en proposant un procédé d'épuration de gaz par photocatalyse dont l'efficacité par unité de temps et par unité de puissance lumineuse, et le cas échéant par unité de surface catalytique exposée, par unité de masse de catalyseur ou par unité de densité surfacique (masse de catalyseur exprimée en gramme par unité de surface catalytique exposée exprimée en mètre carré), soit significativement supérieure à celle des procédés connus à ce jour. Encore un autre but de la présente invention consiste à proposer un dispositif d'épuration de gaz de conception compacte et donc aisé à intégrer dans ou combiner avec un dispositif existant de traitement de gaz tel que par exemple un dispositif de conditionnement d'air. Un autre but de la présente invention consiste à proposer un procédé d'épuration de gaz capable de traiter efficacement des effluents gazeux dont le taux de contaminants peut atteindre jusqu'à environ 10% (100.000 ppm) en volume. Encore un autre but de la présente invention consiste à proposer un dispositif d'épuration de gaz de conception simple et d'entretien aisé, pouvant être fabriqué à partir de matériaux peu coûteux en faisant appel à des techniques de fabrication bien connues, et pouvant être exploité en toute sécurité dans un procédé d'épuration de gaz de prix de revient peu élevé.

### RESUME DE L'INVENTION

La présente invention est basée sur la découverte surprenante que la résolution des problèmes techniques précités ne tient pas tant, comme le suggère l'état de la technique, dans la quantité ou le choix du catalyseur de photooxydation que dans l'agencement du dispositif réactionnel, en particulier dans la disposition de l' (des) élément(s) de support de catalyseur par rapport à la source de rayonnement ultraviolet ou visible et/ou par rapport à la direction du flux gazeux, et plus particulièrement dans le fait que l'élément de support de catalyseur, le cas échéant associé à des moyens de génération de turbulence, est disposé de manière à assurer un écoulement turbulent du gaz à épurer pour favoriser le transport des impuretés à oxyder et/ou des produits d'oxydation de ces impuretés vers le catalyseur. La présente invention vise à une minéralisation substantielle, de préférence totale, des impuretés organiques à oxyder en composants minéraux de base. De façon encore plus précise, l'invention définit un indice de turbulence et une valeur minimale de cet indice pour que le réacteur soit soumis à un régime d'écoulement du gaz à épurer propre à augmenter la vitesse de dégradation des impuretés et par conséquent à augmenter l'efficacité globale du procédé d'épuration. Pour atteindre cette valeur minimale de l'indice de turbulence, l'invention prévoit également que, outre les éléments de support, au moins une restriction puisse être disposée à l'intérieur du réacteur et de manière orthogonale à l'axe du réacteur, lesdites restrictions étant de préférence en nombre et de forme propres à procurer un ralentissement de 10% à 90% environ du gaz à épurer par rapport à un réacteur sans restrictions. Ces restrictions peuvent aussi être revêtues de catalyseur. Pour concourir à l'efficacité globale de l'épuration, l'invention prévoit également que l'intérieur du réacteur puisse être au moins partiellement garni d'une surface réfléchissante, le cas échéant revêtue de catalyseur.

Dans un premier mode d'expression très général, la présente invention concerne un procédé pour l'épuration d'un flux gazeux dans un dispositif comprenant :
- un réacteur comprenant au moins une entrée pour le gaz à épurer et au moins une sortie pour le gaz épuré,
- au moins une source de rayonnement ultraviolet ou visible, et
- au moins un élément de support apte à être revêtu d'un catalyseur capable d'oxyder au moins partiellement les impuretés contenues dans le gaz sous l'action de rayonnement ultraviolet ou visible, ledit élément de support étant disposé à l'intérieur du réacteur,
caractérisé en ce que ledit (lesdits) élément(s) de support est (sont) disposé(s) par rapport à la source de rayonnement ultraviolet ou visible et/ou par rapport à la direction du flux gazeux de manière à permettre d'oxyder, en présence du catalyseur, 90% d'une impureté-modèle constituée d'acétone à une vitesse d'au moins environ 300 µmoles d'impureté-modèle par heure, par watt de puissance de la source et par mètre carré de surface d'élément de support illuminé par la source, ou bien une vitesse d'au moins environ 100 µmoles d'impureté-modèle par heure, par watt de puissance de la source et par gramme de catalyseur, ou encore une vitesse d'au moins environ 2 µmoles d'impureté-modèle par heure et par watt de puissance de la source, ou encore une vitesse d'au moins environ 1 µmole d'impureté-modèle par heure, par watt de puissance de la source et par unité de densité surfacique (exprimée en gramme par mètre carré) de catalyseur.

Comme exprimé ici et dans le reste de la description, les vitesses minimales d'oxydation de 90% d'impureté-modèle, indiquées ci-dessus comme caractéristiques du procédé selon l'invention, doivent s'entendre de vitesses moyennes (calculées entre le début de l'oxydation photocatalytique et le moment où 90% de l'impureté-modèle a disparu) mesurées dans des conditions standardisées, c'est-à-dire sous pression atmosphérique à 25°C dans l'air à un taux d'humidité relative de 50%, et pour des concentrations initiales d'impureté-modèle dans le flux gazeux (en particulier l'air) au moins égales à 500 ppm en volume. En effet, il est bien connu de l'homme de l'art dans le domaine considéré que la vitesse d'épuration diminue lorsque la concentration initiale de l'impureté à épurer diminue. Selon ce premier mode d'expression général de l'invention, dans lequel la direction du flux gazeux est de préférence définie par l'entrée du gaz à épurer et la sortie du gaz épuré du réacteur, le dispositif sera réputé procurer, pour I' épuration d'une impureté autre que l'impureté-modèle une performance équivalente et conforme à l'invention lorsqu'il sera capable d'épurer l'impureté-modèle avec l'une au moins des vitesses minimales indiquées ci-dessus.

Dans un second mode d'expression très général, la présente invention concerne un procédé pour l'épuration d'un flux gazeux dans un dispositif comprenant
- un réacteur comprenant au moins une entrée pour le gaz à épurer et au moins une sortie pour le gaz épuré,
- au moins une source de rayonnement ultraviolet ou visible, et
- au moins un élément de support apte à être revêtu d'un catalyseur capable d'oxyder au moins partiellement les impuretés contenues dans le gaz sous l'action de rayonnement ultraviolet ou visible, ledit élément de support étant disposé à l'intérieur du réacteur,
caractérisé en ce que le réacteur est soumis à un régime turbulent d'écoulement du gaz à épurer caractérisé par un indice de turbulence, calculé selon la formule I_{T} = Re* N / β f dans laquelle
- Re* est un nombre exprimé par Re* = (4 p Vₘ S) / (P ν),
- β = s / S est un paramètre de porosité dont la valeur est égale à 1 si aucune restriction n'est présente à l'intérieur du réacteur,
- f est un facteur de friction correspondant au rapport de toutes les surfaces présentes dans le réacteur à la surface développée par le réacteur en l'absence de restriction(s), égal à Σ surfaces internes développées par le réacteur / surface d'un cylindre de périmètre P,
- S est la surface moyenne de la section orthogonale interne du réacteur en l'absence de restriction(s),
- ρ est la masse volumique du gaz à épurer,
- Vₘ est la vitesse moyenne du gaz à épurer parallèlement à l'axe du réacteur,
- P est la somme du périmètre interne moyen du réacteur et du périmètre externe moyen de la plus petite enveloppe géométrique comprenant la (les) source(s) de rayonnement,
- ν est la viscosité dynamique du gaz à épurer,
- N est le nombre de restrictions dans le réacteur ou bien, en l'absence de restrictions, est égal à 1, et
- s est la surface moyenne de l'ouverture définie par la section orthogonale interne du réacteur au maximum des restrictions, au moins égal à 2.000.

De préférence selon la présente invention, la source de rayonnement ultraviolet ou visible est disposée à l'intérieur du réacteur.

Conformément aux buts précités et au problème technique à résoudre, le procédé selon l'invention est capable de minéraliser majoritairement les impuretés organiques contenues dans le gaz, c'est-à-dire de convertir plus de 50% en moles desdites impuretés en composants minéraux de base correspondant auxdites impuretés, tels que notamment dioxyde de carbone, eau, azote, halogénure d'hydrogène, SO₃ et sulfates.

Les principes de l'invention seront maintenant exposés par référence aux dessins en annexe et aux modes détaillés d'exécution qui suivent.

### BREVE DESCRIPTION DES DESSINS

La figure 1 représente un premier mode de réalisation d'un réacteur photocatalytique pour l'épuration d'effluents gazeux selon l'invention.

La figure 2 représente un second mode de réalisation d'un réacteur photocatalytique pour l'épuration d'effluents gazeux selon l'invention.

La figure 3 représente un réacteur photocatalytique selon l'art antérieur utilisé à titre d'exemple comparatif.

La figure 4 représente un montage en circuit fermé utilisant un réacteur photocatalytique selon l'invention pour l'épuration de l'acétone.

La figure 5 représente la cinétique de disparition de l'acétone dans un réacteur selon le premier mode de réalisation de l'invention, avec et sans surface réfléchissante.

La figure 6 représente l'évolution du gaz carbonique produit par le procédé selon l'invention en fonction de l'acétone consommée.

La figure 7 représente l'évolution du gaz carbonique produit par un procédé de l'art antérieur en fonction de l'acétone consommée.

La figure 8 représente la cinétique de disparition de l'acétone dans un réacteur selon le premier mode de réalisation de l'invention, avec et sans catalyseur sur la surface réfléchissante.

La figure 9 représente la cinétique de disparition de l'acétone dans des réacteurs selon les premiers et second modes de réalisation de l'invention, c'est-à-dire avec et sans restrictions complémentaires au passage du gaz à épurer.

### DESCRIPTION DETAILLEE DE L'INVENTION

Un premier aspect de la présente invention consiste, dans un dispositif pour l'épuration d'un flux gazeux comprenant :
- un réacteur comprenant au moins une entrée pour le gaz à épurer et au moins une sortie pour le gaz épuré,
- au moins une source de rayonnement ultraviolet ou visible, et
- au moins un élément de support apte à être revêtu d'un catalyseur capable d'oxyder au moins partiellement les impuretés contenues dans le gaz sous l'action de rayonnement ultraviolet ou visible, ledit élément de support étant disposé à l'intérieur du réacteur,
à disposer ledit (lesdits) élément(s) de support par rapport à la source de rayonnement ultraviolet ou visible et/ou par rapport à la direction du flux gazeux de manière à oxyder, en présence du catalyseur, 90% d'une impureté-modèle constituée d'acétone à une vitesse moyenne d'au moins environ 300 µmoles d'impureté-modèle par heure, par watt de puissance de la source et par mètre carré de surface d'élément de support illuminé par la source. De préférence cette vitesse est d'au moins environ 500 µmoles d'impureté-modèle, et peut couramment atteindre jusqu'à environ 3000 µmoles d'impureté-modèle par heure, par watt de puissance de la source et par mètre carré de surface d'élément de support illuminé par la source. Comme on le comprend aisément, ces vitesses minimales d'oxydation photocatalytique se rapportent seulement à un composé organique, en l'occurrence l'acétone, choisi comme impureté-modèle pour évaluer l'efficacité de l'épuration du gaz selon l'invention par rapport aux procédés connus dans l'art antérieur. Ce mode d'expression de l'efficacité ne signifie ni que l'invention soit limitée à l'épuration de l'acétone ni que des vitesses encore supérieures à celles mentionnées ci-dessus ne puissent être atteintes, dans les conditions standard mentionnées précédemment, pour l'épuration d'autres composés. En fait, comme le démontrent les expériences rapportées dans les exemples ci-après, l'attention portée à un agencement spécifique du dispositif réactionnel par rapport au flux gazeux à épurer permet d'atteindre des vitesses moyennes d'oxydation photocatalytique (calculées à 90% d'oxydation) encore beaucoup plus élevées allant d'environ 4.000 à plus de 20.000 µmoles d'impureté par heure, par watt de puissance de la source et par mètre carré de surface d'élément de support illuminé par la source pour des composés organiques tels que l'ammoniac, l'isopropanol ou l'éthylamine.

De manière conventionnelle le dispositif selon l'invention comprend un réacteur ayant au moins une entrée pour le gaz à épurer et au moins une sortie pour le gaz épuré, à l'intérieur duquel est disposé au moins un élément de support apte à être revêtu d'un catalyseur de photooxydation, c'est-à-dire capable d'oxyder au moins partiellement les impuretés contenues dans le gaz sous l'action de rayonnement ultraviolet ou visible. De préférence, l'entrée du gaz et la sortie du gaz sont disposées à des extrémités opposées du réacteur. La forme, la matière et les dimensions du réacteur peuvent être quelconques, sous réserve toutefois d'être adaptées à celles de l'élément de support et aux caractéristiques de la source de rayonnement. Ainsi le réacteur devra être constitué d'une matière transparente au rayonnement si la source de rayonnement est disposée à l'extérieur du réacteur. Comme exemples non limitatifs de matières pouvant constituer le réacteur, on peut citer le verre, l'aluminium, l'acier galvanisé, l'acier inoxydable, etc. Bien que le réacteur puisse aussi être de forme cubique ou sphérique, il est préférable qu'une dimension longitudinale du réacteur soit plus grande qu'une dimension transversale dudit réacteur. Pour cette raison, les formes parallélépipédiques et cylindriques sont généralement préférées. Les dimensions du réacteur doivent être adaptées, de manière connue de l'homme de l'art, au volume du gaz à épurer et, le cas échéant, à l'environnement dans lequel le réacteur est placé, par exemple lorsqu'il est intégré dans ou combiné avec un dispositif existant de traitement de gaz tel que par exemple un dispositif de conditionnement d'air. De préférence, la section interne du réacteur ne dépasse pas 50 fois environ la section interne du plus petit tube pouvant comprendre l'ensemble des sources de rayonnement. De préférence également, la longueur de la partie du réacteur comprenant les éléments de support de catalyseur est comprise entre 1 et 15 fois environ le périmètre intérieur de ce réacteur. Grâce à l'efficacité exceptionnelle du dispositif selon l'invention, les dimensions du réacteur peuvent être très réduites, par exemple de l'ordre de quelques centimètres à quelques dizaines de centimètres pour un dispositif à usage domestique, et de l'ordre du mètre ou de quelques mètres pour un dispositif à usage industriel.

La forme, la matière et les dimensions de l' (des) élément(s) de support peuvent être aussi choisis dans de vastes gammes, pour autant qu'il(s) est (sont) disposé(s) de manière à assurer un écoulement turbulent du gaz à épurer propre à favoriser le transport des impuretés à oxyder et/ou des produits d'oxydation de ces impuretés vers le catalyseur, de préférence un écoulement turbulent caractérisé par l'indice de turbulence I_{T} mentionné précédemment. De préférence toutefois, l'élément de support est réparti de manière discontinue dans la dimension longitudinale, c'est-à-dire selon l'axe longitudinal, du réacteur. Autrement dit, le réacteur contient une quantité discrète (un nombre fini) d'éléments de support répartis à intervalles le long du réacteur contrairement à l'art antérieur prévoyant un ou plusieurs éléments de support sur toute la longueur du réacteur. Les intervalles de répartition des éléments de support peuvent être réguliers ou non. De préférence, les éléments de support extrêmes sont placés à proximité immédiate de l'entrée et de la sortie du réacteur. De préférence aussi, l'élément de support est un élément plan ou quasi-plan disposé perpendiculairement ou quasi-perpendiculairement à la direction principale du gaz à épurer, telle que définie par l'entrée du gaz et la sortie du gaz. Par quasi-perpendiculairement au sens de la présente invention, on entend que le plan de l'élément de support ou l'un au moins des plans de symétrie de celui-ci fait avec la direction principale du gaz à épurer un angle d'au moins 70° environ. Par exemple l'élément de support peut être une surface de forme de préférence identique ou similaire à, ou éventuellement différente de, la section transversale du réacteur, telle qu'un disque ou un polygone. Selon un mode avantageux de réalisation de la présente invention, la (les) source(s) de rayonnement ultraviolet ou visible est (sont) placée(s) selon l'axe longitudinal du réacteur et, dans ce cas, chaque élément de support est percé d'un trou (de forme adaptée à celle de la source) en son centre de manière à être disposé autour de la source mais perpendiculairement ou quasi-perpendiculairement à l'axe du réacteur. Le nombre des éléments de support de catalyseur n'est pas un paramètre critique de la présente invention, pour autant qu'il concourre à assurer un écoulement turbulent du gaz à épurer pour favoriser le transport des impuretés à oxyder et/ou des produits d'oxydation de ces impuretés vers le catalyseur. Des expériences rapportées dans les exemples ci-après, il résulte qu'un nombre d'environ 2 à 20, de préférence 5 à 15, éléments de support est suffisant pour obtenir l'effet recherché. Toutefois, un seul élément de support peut aussi convenir, notamment lorsqu'une dimension longitudinale du réacteur n'est pas plus grande qu'une dimension transversale dudit réacteur. Comme ceci se conçoit aisément, le nombre d'éléments de support ne doit pas être si élevé et leur espacement ne doit pas être si rapproché qu'il conduise à limiter la formation d'écoulements turbulents du gaz entre les éléments de support. En d'autres termes, l'espacement des éléments de support doit être commensurable avec leur dimension, plus particulièrement avec l'espace moyen compris entre la paroi externe du réacteur et l'enveloppe géométrique (par exemple le cylindre interne) comprenant la ou les sources lumineuses. Le nombre d'éléments de support est en rapport avec la dimension longitudinale du réacteur.

La nature de l'élément de support de catalyseur du dispositif selon l'invention et/ou utilisé dans le procédé selon l'invention n'est pas un paramètre critique de la présente invention. Tout matériau de résistance connue pour pouvoir supporter durablement un catalyseur de photooxydation, l'effet d'un rayonnement ultraviolet ou visible et la turbulence du flux gazeux peut être utilisé dans le contexte de la présente invention. Des exemples non limitatifs de tels matériaux sont le verre et des métaux, de préférence des métaux offrant une réflexion satisfaisante du rayonnement lumineux tels que l'aluminium ou l'acier inoxydable.

La source de rayonnement ultraviolet ou visible faisant partie du dispositif selon l'invention est de préférence une source de rayonnement courante du commerce. S'agissant de source à rayonnement ultraviolet, elle étale généralement son rayonnement dans une gamme de longueurs d'ondes de 300 à 400 nm environ (sources dites "UV A"), avec un maximum autour de 365 nm. S'agissant de source à rayonnement visible, elle étale généralement son rayonnement dans une gamme de longueurs d'ondes de 400 à 700 nm environ. Le type de construction (notamment la matière et la géométrie) et le mode de fonctionnement (notamment le gaz émetteur) de la source ne sont pas des paramètres critiques de la présente invention. Comme exemples de sources à rayonnement ultraviolet, on peut citer notamment des sources à basse pression comprenant un gaz de mercure, néon, argon, krypton ou xenon ou leurs mélanges, comme il est bien connu de l'homme de l'art. L'enveloppe de la source peut, de manière conventionnelle, être constituée de céramique, de verre ordinaire (quartz fondu ou silice) ou de verre à solarisation réduite (selon la technologie de source à longue durée développée par la société Philips) et peut le cas échéant être revêtue de phosphore. La puissance nominale de la source, c'est-à-dire sa puissance consommée, n'est pas un paramètre critique de la présente invention et peut varier de 2 à 500 watts environ. Toutefois, en raison de l'efficacité exceptionnelle du dispositif selon l'invention, il n'est pas nécessaire d'avoir recours à des sources de forte puissance comme dans l'art antérieur. Comme le confirment les expériences rapportées dans les exemples suivants, il est souhaitable que la source procure une intensité lumineuse moyenne sur le photocatalyseur, c'est-à-dire une puissance par unité de surface de photocatalyseur illuminé, d'environ 20 à 300 mW/cm², de préférence 50 à 150 mW/cm². Selon la présente invention, la source de rayonnement ultraviolet ou visible peut également être une source de lumière naturelle, éclairante de l'extérieur du réacteur ou bien par le moyen de guides d'ondes avec formation éventuelle de convection thermique.

Selon un mode avantageux de réalisation de la présente invention, l'efficacité du dispositif peut être encore améliorée en prévoyant, en complément de l' (des) élément(s) de support de catalyseur, au moins une restriction disposée à l'intérieur du réacteur et orthogonale à l'axe de celui-ci, pour accroître la turbulence d'écoulement du gaz à épurer. De préférence, le nombre et la forme de ces restrictions sont choisis de manière à procurer un ralentissement de 10% à 90% environ du gaz à épurer par rapport à un réacteur sans restriction. De préférence encore, chaque restriction occupe, dans une section transversale du réacteur, plus du tiers, et de préférence plus de la moitié, de la section interne disponible au passage du gaz entre la paroi interne du réacteur et la source de rayonnement. De préférence, tout comme les éléments de support, les restrictions sont réparties de manière discontinue dans la dimension longitudinale, c'est-à-dire selon l'axe longitudinal, du réacteur. Autrement dit, le réacteur contient une quantité discrète (un nombre fini) de restrictions réparties à intervalles le long du réacteur. Les intervalles de répartition des restrictions peuvent être réguliers ou non. Le nombre de restrictions n'est pas un paramètre critique de la présente invention et peut être inférieur, égal ou supérieur à celui des éléments de support. Comme ceci se conçoit aisément, le nombre de restrictions ne doit pas être si élevé et leur espacement ne doit pas être si rapproché qu'il conduise à limiter la formation d'écoulements turbulents du gaz entre les éléments de support. En d'autres termes, l'espacement des restrictions doit être commensurable avec leur dimension, plus particulièrement avec l'espace moyen compris entre la paroi externe du réacteur et l'enveloppe géométrique (par exemple le cylindre interne) comprenant la ou les sources lumineuses. Le nombre de restrictions est en rapport avec la dimension longitudinale du réacteur. Selon un autre mode de réalisation, les restrictions peuvent être revêtues d'un catalyseur capable d'oxyder au moins partiellement les impuretés contenues dans le gaz sous l'action de rayonnement ultraviolet ou visible, c'est-à-dire un catalyseur de photooxydation. Ce catalyseur peut être le même que celui déposé sur les éléments de support ou bien un autre catalyseur.

Selon un autre mode avantageux de réalisation de la présente invention, l'intérieur du réacteur est au moins partiellement garni d'une surface réfléchissante, c'est-à-dire capable de réfléchir une partie substantielle du rayonnement ultraviolet ou visible de la source, comme par exemple être construit à l'aide d'un matériau réfléchissant ou d'un matériau recouvert d'un revêtement réfléchissant, ou bien garni d'une feuille d'aluminium de faible épaisseur (25 à 100 µm environ). La nature de la surface réfléchissante n'est pas un paramètre critique de la présente invention, sous réserve du niveau de réflexion du rayonnement ultraviolet ou visible. Selon une variante de ce mode de réalisation, la surface réfléchissante peut être revêtue, de préférence en très fine couche (afin de ne pas trop abaisser le niveau de réflexion du rayonnement ultraviolet ou visible), d'un catalyseur capable d'oxyder au moins partiellement les impuretés contenues dans le gaz sous l'action du rayonnement ultraviolet ou visible de la source, c'est-à-dire un catalyseur de photooxydation. Ce catalyseur peut être le même que celui déposé sur les éléments de support ou bien un autre catalyseur. De préférence la surface réfléchissante (en l'absence de dépôt de catalyseur) procure, dans la gamme de longueurs d'onde considérée, une réflexion du rayonnement ultraviolet ou visible supérieure à 50% environ (telle que mesurée selon une technique usuelle faisant appel à une sphère d'intégration), et plus particulièrement supérieure à 80%. Cette surface réfléchissante peut supporter une couche de catalyseur de photooxydation d'épaisseur telle qu'elle est capable d'absorber au plus 65% environ de la lumière active d'un point de vue photochimique. La surface réfléchissante, lorsqu'elle est revêtue d'un tel catalyseur, procure donc de préférence une réflexion de la lumière photochimiquement active d'au moins 20% environ, de préférence au moins 50% environ.

Le dispositif selon l'invention peut comprendre en outre des moyens propres à assurer ou amplifier un écoulement turbulent du gaz à épurer dans le réacteur, comme par exemple des moyens de ventilation forcée ou des moyens de convection thermique. De préférence lesdits moyens permettent d'assurer, seuls ou en combinaison avec les autres éléments présents dans le réacteur, à savoir les éléments de support et éventuellement les restrictions, une vitesse linéaire moyenne de transit du gaz à épurer dans le réacteur comprise entre 0,05 et 10 m/s environ. De façon conventionnelle, cette vitesse peut être mesurée au moyen de tout dispositif approprié bien connu de l'homme de l'art, tel qu'un anémomètre, placé par exemple à proximité de la sortie du réacteur.

La technique utilisée pour déposer le catalyseur de photooxydation sur l'élément de support, et le cas échéant sur la surface réfléchissante, du dispositif selon l'invention n'est pas un paramètre critique de la présente invention. Toute méthode connue pour procurer un dépôt durable et, de préférence, d'épaisseur sensiblement homogène peut être utilisée dans le contexte de la présente invention. Des exemples non limitatifs de telles méthodes sont bien connus de l'homme de l'art et incluent le dépôt chimique en phase vapeur, le revêtement par centrifugation (aussi connu sous le terme de " spin coating " et consistant à recouvrir la surface d'une plaque en la faisant tourner rapidement selon un axe perpendiculaire à sa surface et en laissant s'étaler une goutte de solution placée en son centre) et le trempage dans une suspension catalytique dans un solvant organique suivi d'une étape de séchage à une température n'induisant pas une modification de la forme cristalline du catalyseur, de préférence une température comprise entre environ 10°C et 240°C, et encore de préférence entre environ 20°C et 120°C, la durée du séchage étant naturellement une fonction inverse de la température de séchage. Dans la méthode de trempage, le cycle de trempage et séchage peut être répété autant de fois que nécessaire jusqu'à obtention de la masse de catalyseur désirée par unité de surface, soit typiquement entre 0,5 g/m² et 15 g/m² environ.

La nature du catalyseur de photooxydation déposé sur l'élément de support du dispositif selon l'invention et/ou utilisé dans le procédé selon l'invention n'est pas un paramètre critique de la présente invention. Tout catalyseur de type semiconducteur connu pour oxyder, sous l'effet d'un rayonnement ultraviolet ou visible, des espèces oxydables présentes à l'état d'impuretés dans un gaz peut être utilisé dans le contexte de la présente invention. La littérature fournit de très nombreux exemples de tels catalyseurs, parmi lesquels les dioxydes de titane, de silicium, d'étain et de zirconium, l'oxyde de zinc, les trioxydes de tungstène et de molybdène, l'oxyde de vanadium, le carbure de silicium, les sulfures de zinc et de cadmium, le séléniure de cadmium, leurs mélanges en toutes proportions et leurs solutions solides. Ces catalyseurs peuvent en outre être dopés par l'addition de faibles proportions (c'est-à-dire jusqu'à 10% environ en poids) d'autres métaux ou de composés d'autres métaux tels que des métaux précieux, en particulier le platine, l'or et le palladium, ou des terres rares (tels que le niobium et le ruthénium). Le cas échéant, le catalyseur de photooxydation peut être déposé sur un support tel qu'une zéolithe, par exemple la mordénite. Dans le cas de l'oxyde de titane, le catalyseur peut aussi être préparé, selon les techniques bien connues de l'homme de l'art, sous forme d'aérogel ayant une surface spécifique élevée. En raison de l'efficacité exceptionnelle du dispositif selon l'invention, il n'est toutefois pas nécessaire d'avoir recours à des catalyseurs d'activité très élevée, de fabrication complexe et :ou de prix de revient élevé, et le dioxyde de titane dans sa forme cristalline anatase convient généralement bien.

Un autre aspect de la présente invention consiste, dans un dispositif pour l'épuration d'un flux gazeux comprenant :
- un réacteur comprenant au moins une entrée pour le gaz à épurer et au moins une sortie pour le gaz épuré,
- au moins une source de rayonnement ultraviolet ou visible, et
- au moins un élément de support apte à être revêtu d'un catalyseur capable d'oxyder au moins partiellement les impuretés contenues dans le gaz sous l'action de rayonnement ultraviolet ou visible, ledit élément de support étant disposé à l'intérieur du réacteur,
à disposer ledit (lesdits) élément(s) de support par rapport à la source de rayonnement ultraviolet ou visible et/ou par rapport à la direction du flux gazeux de manière à oxyder, en présence du catalyseur (dans les conditions standardisées mentionnées précédemment), 90% d'une impureté-modèle constituée d'acétone à une vitesse moyenne d'au moins environ 100 µmoles d'impureté-modèle par heure, par watt de puissance de la source et par gramme de catalyseur. De préférence cette vitesse est d'au moins environ 200 µmoles d'impureté-modèle, et peut couramment atteindre jusqu'à environ 2.500 µmoles d'impureté-modèle par heure, par watt de puissance de la source et par gramme de catalyseur. Comme on le comprend aisément, ces vitesses minimales d'oxydation photocatalytique se rapportent seulement à un composé organique, en l'occurrence l'acétone, choisi comme impureté-modèle pour évaluer l'efficacité de l'épuration du gaz par rapport aux procédés connus dans l'art antérieur. Ce mode d'expression de l'efficacité ne signifie ni que l'invention soit limitée à l'épuration de l'acétone ni que des vitesses encore supérieures à celles mentionnées ci-dessus ne puissent être atteintes pour l'épuration d'autres composés. En fait, comme le démontrent les expériences rapportées dans les exemples ci-après, l'attention portée à un agencement spécifique du dispositif réactionnel par rapport au flux gazeux à épurer permet d'atteindre des vitesses d'oxydation photocatalytique (calculées à 90% d'oxydation) encore beaucoup plus élevées allant d'environ 1.500 à environ 4.000 µmoles d'impureté par heure, par watt de puissance de la source et par gramme de catalyseur pour des composés organiques tels que l'ammoniac, l'isopropanol ou l'éthylamine.

Un autre mode d'expression de l'efficacité surprenante de l'invention consiste à disposer ledit (lesdits) élément(s) de support par rapport à la source de rayonnement ultraviolet ou visible et/ou par rapport à la direction du flux gazeux de manière à oxyder, en présence du catalyseur, 90% d'une impureté-modèle constituée d'acétone à une vitesse moyenne d'au moins environ 2 µmoles d'impureté-modèle par heure et par watt de puissance de la source. De préférence cette vitesse est d'au moins environ 10 µmoles d'impureté-modèle, et peut couramment atteindre jusqu'à environ 70 µmoles d'impureté-modèle par heure et par watt de puissance de la source. Comme dans les précédents modes d'expression de l'efficacité, des vitesses (calculées à 90% d'oxydation) dans une gamme d'environ 50 à environ 400 µmoles d'impureté par heure et par watt de puissance de la source sont couramment accessibles pour des composés organiques tels que l'ammoniac, l'isopropanol ou l'éthylamine. Encore un autre mode d'expression de l'efficacité surprenante de l'invention consiste à disposer ledit (lesdits) élément(s) de support par rapport à la source de rayonnement ultraviolet ou visible et/ou par rapport à la direction du flux gazeux de manière à oxyder, en présence du catalyseur, 90% d'une impureté-modèle constituée d'acétone à une vitesse moyenne d'au moins environ 1 µmole d'impureté-modèle par heure, par watt de puissance de la source et par unité (gramme par mètre carré) de densité surfacique du catalyseur. De préférence cette vitesse est d'au moins environ 5 µmoles d'impureté-modèle, et peut couramment atteindre jusqu'à environ 50 µmoles d'impureté-modèle par heure, par watt de puissance de la source et par unité (gramme par mètre carré) de densité surfacique du catalyseur. Comme dans les précédents modes d'expression de l'efficacité, des vitesses (calculées à 90% d'oxydation) dans une gamme d'environ 4 à environ 60 µmoles d'impureté par heure, par watt de puissance de la source et par unité (gramme par mètre carré) de densité surfacique du catalyseur sont couramment accessibles pour des composés organiques tels que l'ammoniac, l'isopropanol ou l'éthylamine.

Selon un autre aspect, la présente invention concerne aussi un procédé d'épuration d'un gaz utilisant un dispositif d'épuration tel que décrit précédemment, c'est-à-dire un procédé d'épuration d'un gaz dans un dispositif comprenant :
- un réacteur,
- au moins une source de rayonnement ultraviolet ou visible, et
- au moins un élément de support revêtu d'un catalyseur capable d'oxyder au moins partiellement les impuretés contenues dans le gaz sous l'action de rayonnement ultraviolet ou visible, ledit élément de support étant disposé à l'intérieur du réacteur,
ledit procédé comprenant le passage du gaz à travers le réacteur et étant caractérisé en ce que le passage du gaz à travers le réacteur s'effectue selon un régime turbulent, favorisant le contact du gaz avec le catalyseur, caractérisé par un indice de turbulence, calculé tel que mentionné précédemment, au moins égal à 2.000 et/ou de manière à oxyder, en présence du catalyseur, 90% d'une impureté-modèle constituée d'acétone (dans les conditions standardisées mentionnées précédemment) à une vitesse moyenne d'au moins environ 300 µmoles d'impureté-modèle par heure, par watt de puissance de la source et par mètre carré de surface d'élément de support illuminé par la source, ou bien une vitesse moyenne d'au moins environ 100 µmoles d'impureté-modèle par heure, par watt de puissance de la source et par gramme de catalyseur, ou bien une vitesse moyenne d'au moins environ 2 µmoles d'impureté-modèle par heure et par watt de puissance de la source, ou encore une vitesse moyenne d'au moins environ 1 µmole d'impureté-modèle par heure, par watt de puissance de la source et par unité (gramme par mètre carré) de densité surfacique du catalyseur.

Le gaz traité dans le procédé selon l'invention peut être tout gaz chargé en impuretés dont on désire se débarasser, pour autant que ce gaz contienne une proportion d'oxygène suffisante pour permettre à la photooxydation catalytique de se produire. Dans la plupart des cas, il s'agit d'air pollué par des contaminants gazeux ou hautement volatils. Toutefois il peut s'agir aussi de gaz industriels autres que l'air contenant, à une étape spécifique d'un processus industriel, des impuretés indésirables. Si nécessaire, on peut injecter dans le gaz à traiter une quantité appropriée d'oxygène ou autre espèce oxydante telle que l'ozone. Comme exemples non limitatifs de contaminants éliminables grâce au procédé selon l'invention, on peut citer toutes sortes de composés organiques volatils tels que des hydrocarbures aliphatiques saturés (tels que méthane, propane, hexane, octane, etc.) et insaturés (tels que le butadiène-1,3) et des hydrocarbures aromatiques (tels que benzène, toluène, xylènes) légers (c'est-à-dire ayant jusqu'à 8 atomes de carbone environ), des hydrocarbures halogénés (tels que par exemple le trichloréthylène), des hydrocarbures oxygénés (en particulier des alcools tels que méthanol, éthanol, isopropanol, butanol ; des cétones telles que l'acétone et l'hexanone; des aldéhydes tels que formaldéhyde, acétaldéhyde, propionaldéhyde et butyraldéhyde; des éthers tels que le diéthylether; des phénols et phénols chlorés), des amines (telles que triméthylamine, éthylamine et pyridine), des dioxines, des triazines, des biphényles polychlorés, des cyanures, des hydrocarbures soufrés (tels que le méthylmercaptan), ainsi que des composés non organiques tels que l'ammoniac, le sulfure d'hydrogène, le monoxyde de carbone, des composés nitrés (oxydes d'azote), des sulfites, etc.

Le procédé selon l'invention est applicable à l'épuration de contaminants en des concentrations très variables par rapport au gaz à épurer. De préférence ces concentrations varient dans une gamme allant d'environ 5 à environ 100.000 ppmv (parties par million en volume), plus préférentiellement de 100 à 20.000 ppmv, et encore plus préférentiellement de 500 à 5.000 ppmv. Par ailleurs, le procédé selon l'invention est applicable dans une large gamme de températures (de préférence comprises entre 0° et 70°C environ) et de pressions. Comme il va de soi, le procédé selon l'invention est de préférence mis en oeuvre à température ambiante et sous pression atmosphérique. La température maximale d'exécution du procédé dépendra le plus souvent de la température optimale de fonctionnement de la source de rayonnement ultraviolet ou visible choisie.

Le procédé selon l'invention présente de nombreux avantages (rapidité d'épuration, efficacité très satisfaisante même en présence de catalyseurs ordinaires et peu coûteux, dispositif compact, modulaire et de fabrication simple) qui le rendent particulièrement adapté au traitement de l'air dans de nombreux milieux tels que les habitations, les véhicules de transport sur route (automobiles, camions), sur rail (trains) et dans les airs (avions), les élevages d'animaux, les zones d'entreposage, les armoires frigorifiques domestiques et industrielles, ainsi qu'au traitement des effluents gazeux de réacteurs chimiques ou biologiques. Il est en outre parfaitement compatible avec d'autres procédés de traitement de l'air, tels que le conditionnement (par chauffage ou refroidissement) de l'air, avec lesquels il peut être combiné dans un seul et même dispositif.

La présente invention est maintenant illustrée au moyen des exemples non limitatifs suivants.

### Exemple 1 - préparation du support photocatalytique.

5 g de dioxyde de titane (disponible commercialement sous la référence P25 auprès de la société Degussa, et comprenant environ 20% de rutile et 80% d'anatase) ou, comme précisé dans chaque exemple ci-après, d'un autre catalyseur de photooxydation à base d'oxyde(s) semi-conducteur(s), est mis en suspension dans 500 ml d'alcool à l'aide d'un bain à ultrasons de marque Bransonic d'une puissance de 130W pour un contenant de 5,5 litres. La suspension obtenue, stable sur une période de plusieurs semaines, est ensuite utilisée pour le revêtement d'éléments de support de catalyseur de nature et de nombre divers, par exemple en aluminium ou en papier. Ces éléments peuvent être des ailettes longitudinales selon l'art antérieur (exemple 8) ou bien des rondelles selon l'invention (autres exemples). Le revêtement s'effectue en trempant rapidement l'élément de support, sous ultrasons, dans la suspension de catalyseur puis en le séchant à une température d'environ 70°C. Le cycle de trempage et séchage est répété jusqu'à obtention de la masse de catalyseur désirée.

### Exemple 2 - premier mode de réalisation du dispositif selon l'invention

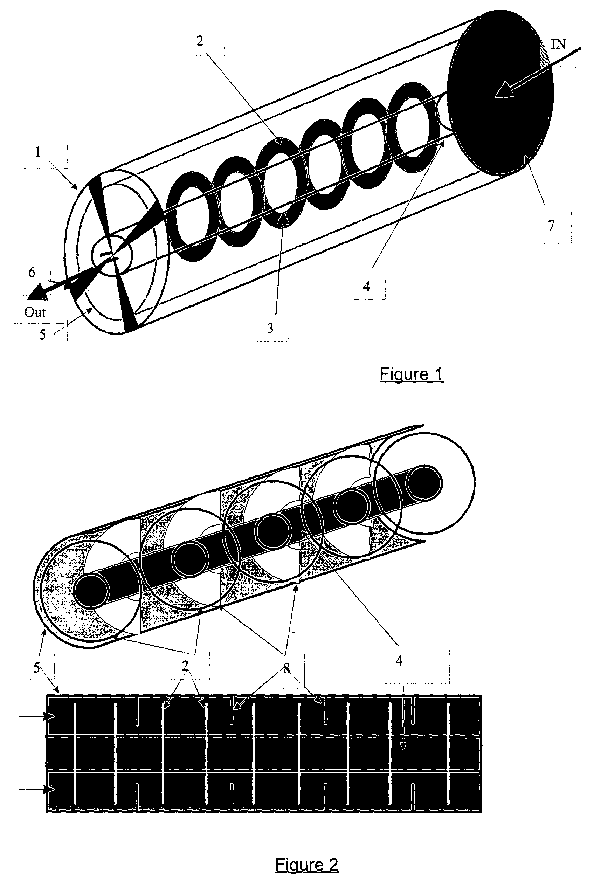

Ce premier mode de réalisation est décrit par référence à la représentation en perspective de la figure 1. Des rondelles (2) de 35 mm de diamètre extérieur comportant une ouverture circulaire (3) de 15 mm de diamètre en leur centre sont d'abord obtenues par découpe soit de feuilles d'aluminium d'épaisseur 100 µm dégraissées au méthanol, soit de filtres en papier (Whatman n°5) puis revêtues de catalyseur conformément à la méthode de l'exemple 1.

Un réacteur cylindrique (1) en verre de 25 cm de long et 4 cm de diamètre intérieur est muni de rondelles (2) - dont six sont représentées sur la figure 1 - jouant le rôle de supports catalytiques, placées le long d'une source (4) constituée d'un tube fluorescent (UV A Cleo 15 watts, commercialisée par Philips) de 15 mm de diamètre et espacées l'une de l'autre d'environ 12 mm. Un réflecteur (5) peut être installé contre la paroi interne du réacteur (1). Un ventilateur (6) et un filtre (7) sont placés aux extrémités du réacteur (1).

### Exemple 3 - second mode de réalisation du dispositif selon l'invention.

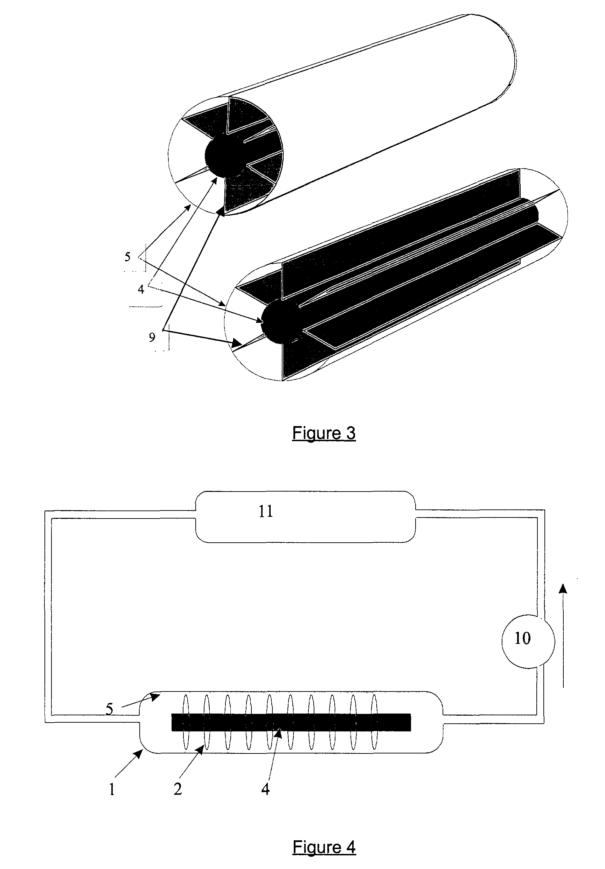

Ce second mode de réalisation est décrit par référence à la figure 2 qui en fournit une représentation en perspective (vue du haut) et une coupe longitudinale (vue du bas). Il comprend, outre les éléments déjà présents sur la figure 1 repérés par les mêmes numéros et de mêmes dimensions qu'à l'exemple 2, des chicanes (8) formées de rondelles de 4 cm de diamètre extérieur pour une ouverture interne de 2 cm de diamètre, insérées toutes les deux rondelles (2) et en contact direct avec la paroi du réacteur (1). Un ventilateur (6) et un filtre (7) (non représentés sur la figure 2) peuvent être placés aux extrémités du réacteur (1), comme à l'exemple 2.

### Exemple 4 (comparatif) - dispositif selon l'art antérieur.

Un réacteur de même dimensions extérieures que celui des exemples 2 et 3 et conforme au brevet U.S. n° 5.790.934 est décrit par référence à la figure 3 qui en fournit une représentation en perspective avec coupe transversale (vue du haut) et une représentation en perspective ouverte (vue du bas). Comprenant les éléments déjà présents sur la figure 1 et repérés par les mêmes numéros, il est obtenu en remplaçant les rondelles (2) par six ailettes (9) longitudinales, équidistantes (c'est-à-dire faisant entre elles un angle de 60 degrés), disposées de manière radiale par rapport au tube (4) et occupant tout l'espace entre le tube (4) et le réflecteur (5) appliqué contre la face interne du réacteur (1). Un ventilateur (6) et un filtre (7) (non représentés sur la figure 3) peuvent être placés aux extrémités du réacteur (1), comme à l'exemple 2.

### Exemple 5 - épuration de l'acétone - comparaison avec l'art antérieur

L'efficacité de la présente invention pour l'épuration de l'acétone est comparée à celle de la technique divulguée dans la demande de brevet WO 99/24277. A cet effet on réalise un montage expérimental en circuit fermé, représenté à la figure 4, similaire à celui de la figure 1 dudit document antérieur et comprenant un dispositif analogue au mode de réalisation de l'exemple 2. Pour cette raison, les numéros de repère sur la figure 4 désignent les mêmes éléments que sur la figure 1, à savoir le réacteur (1), les rondelles (2), la source fluorescente (4) et le réflecteur (5). Ce dispositif est en circuit avec une pompe (10) et une ampoule à gaz (11). L'acétone est injectée dans l'ampoule (11) où elle est vaporisée avant d'être mise en présence du catalyseur. Le débit de circulation du gaz est d'environ 0,5 litre par minute.

Dans ce montage, on utilise 10 rondelles de papier filtre (Whatman n°5) revêtues de catalyseur conformément à la méthode de l'exemple 1. Toutefois le catalyseur utilisé n'est pas le dioxyde de titane P25 mais un TiO₂ sol-gel préparé de la façon suivante : à 9 ml de tétraéthoxyde de titane Ti(OC₂H₅)₄ de la firme Aldrich on ajoute progressivement, dans un récipient en verre et sous agitation magnétique, 11 ml d'alcool puis 12,5 ml d'eau. L'agitation est maintenue durant une heure après laquelle le produit est mûri à 70°C pendant 17 heures. Ensuite, une calcination à 400°C pendant 2 heures permet d'obtenir 3 grammes de poudre d'anatase qui, avant sa mise sur support, est légèrement broyée.

Comme dans le mode opératoire du document antérieur :
- la concentration initiale en acétone est égale à environ 77.000 ppmv (parties par million en volume).
- le système est d'abord stabilisé pendant 10 heures avec la source UV éteinte, ce qui permet d'observer (voir tableau 1 ci-après) une forte absorption de l'acétone sur le catalyseur et les diverses surfaces internes du dispositif avant réaction.

Lorsque le système est équilibré, la source est allumée et des prises d'échantillons sont effectuées à intervalles réguliers et analysées par chromatographie en phase gazeuse couplée à un spectromètre de masse pour suivre l'évolution de l'élimination de l'acétone et la production de sous-produits en traces (acétaldéhyde et formaldéhyde) et des produits de minéralisation (CO₂ et H₂O).

Les conditions opératoires ainsi que les résultats obtenus décrits dans le document antérieur (pages 13 à 22, figure 15B pour l'anatase, figure 17A pour l'aérogel) d'une part et observés dans le présent exemple d'autre part sont résumés dans le tableau 1 ci-après.

A partir de l'instant où commence l'oxydation photocatalytique sous l'action du rayonnement ultraviolet (t = 10 heures), on observe que le temps nécessaire à la disparition de 90% de l'acétone est de 90 minutes selon l'invention et de 15 heures en employant l'aérogel de la demande de brevet WO 99/24277, tandis que seulement environ 85% de l'acétone a disparu après 30 heures en employant l'anatase du même document antérieur. Compte tenu de la quantité de catalyseur et de la puissance d'illumination mises en jeu, la vitesse d'oxydation permise par l'exemple selon l'invention est toujours, quelque soit le mode d'expression de cette vitesse, au moins 17 fois supérieure à celle démontrée par l'état de la technique.

**Tableau 1**

| | WO 99/24277 | WO 99/24277 | Exemple 5 |
|---|---|---|---|
| Type de dioxyde de titane | anatase | aérogel | anatase (sol-gel) |
| Masse (g) de catalyseur | 3.4 | 1.33 | 0.060 |
| Surface spécifique (m²/g) du catalyseur | 80 | 423 | 150 |
| Surface illuminée (cm²) | 48,5 | 26,6 | 157 |
| Puissance source UV (W) | 300 | 300 | 15 |
| Volume du système (ml) | 300 | 300 | 600 |
| Volume initial acétone (ml) | 0.075 | 0.075 | 0.140 |
| Concentrations d'acétone (µmoles/l) | | | |
| - initiale | 3000 | 3000 | 3200 |
| - après 10 heures | 2400 | 240 | 320 |
| - après 11,5 heures | 2130 | 216 | 32 |
| - après 25 heures | 780 | 24 | n.d. |
| - après 40 heures | 350 | 10 | n.d. |
| Vitesse à 90% d'oxydation | | | |
| - en µmole/h/W/g | 0,067 (*) | 0,036 | 213 |
| - en µmole/h/W/m² | 47 (*) | 18 | 815 |
| - en µmole/h/W/g/m² | 13,8 (*) | 13,6 | 13600 |
| - en µmole.cm²/h/W/g | 3,3 (*) | 0,96 | 33500 |
| - en µmole/h/W | 0,228(*) | 0,048 | 12,8 |
| n.d. : non détectable | | | |

| | | | |
|---|---|---|---|
| (*) vitesse à 85% d'oxydation après 30 h d'illumination | | | |

### Exemple 6 - comparaison du fonctionnement d'un réacteur avec et sans réflecteur optique interne.

Deux configurations A et B d'un réacteur conforme au premier mode de réalisation de l'invention (exemple 2, figure 1) sont évaluées dans une enceinte parallélépipédique de dimensions 1m x 1m x 0.6m fermée hermétiquement, garnie de feuilles de polyfluorure de vinyle Tedlar afin de limiter l'adsorption sur les parois, et dont le volume interne libre est de 450 litres. Dans chaque variante, le réacteur est muni de 15 rondelles en aluminium recouvertes de TiO₂ (18 mg au total) conformément à l'exemple 1 et espacées de 1,5 cm environ. Dans la configuration A, le réacteur (1) ne comporte pas de réflecteur. Dans la configuration B, le réacteur (1) comporte un réflecteur (5) en aluminium de 100 µm d'épaisseur placé contre sa paroi interne. Chaque configuration de réacteur est placée à tour de rôle dans l'enceinte fermée de 450 litres et connectée à un premier ventilateur permettant de recycler plusieurs fois l'air de l'enceinte à travers la zone de photocatalyse. 0.65 g d'acétone (correspondant à une concentration initiale de 555 ppmv) est versée dans l'enceinte et homogénéisée au moyen d'un second ventilateur. La source (4) est allumée lorsque la concentration d'acétone dans l'enceinte est stabilisée, soit environ 15 minutes après l'introduction de l'acétone. La vitesse linéaire moyenne de l'air dans le réacteur est de 1,1 m/s, soit un temps moyen de résidence de 0.22 s. Compte tenu d'une viscosité dynamique de 0,000018 Pa.s et d'une masse volumique de l'air de 1,2 kg/m³, il est aisé de calculer que l'indice de turbulence, défini par la formule I_{T} = Re* x N /(β x f), des configurations A et B du réacteur est égal à 96.775 (à cet effet, on vérifiera d'abord que Re* = 2.719, β = 0,27 et f = 1,55).

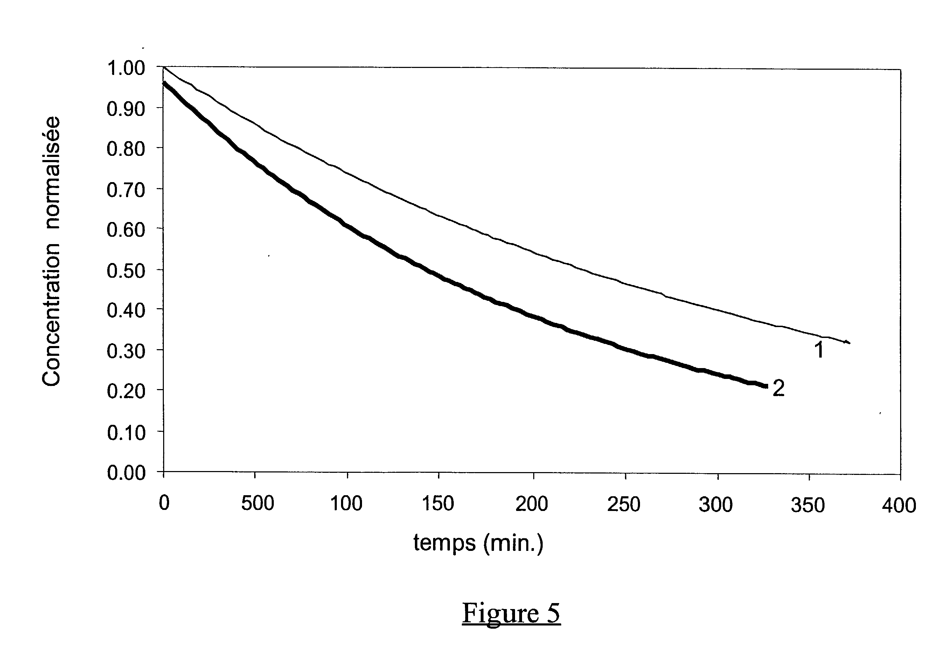

L'évolution du système est suivie au moyen d'un chromatographe en phase gazeuse Quad de la société Agilent travaillant simultanément sur trois colonnes (une colonne OV1 pour suivre l'acétone, un tamis moléculaire à 5 angstroms pour suivre l'oxygène et une colonne PPQ pour la détection du gaz carbonique) et la concentration normalisée en acétone est représentée sur la figure 5. On observe ainsi que 50% de l'acétone a disparu après 1400 minutes pour le réacteur avec réflecteur (courbe 2) et après 2250 minutes seulement pour le réacteur sans réflecteur (courbe 1). Le tableau 2 ci-après indique, selon différents modes d'expression, la vitesse de disparition de l'acétone à l'origine d'une part et après 50% d'oxydation d'autre part, exprimée en conditions standard.

**Tableau 2**

| Configuration | A | B |
|---|---|---|
| Vitesse initiale | | |
| - en µmole/h/W/g | 765 | 3440 |
| - en µmole/h/W/m² | 585 | 2630 |
| - en µmole.m²/h/W/g | 18 | 81 |
| - en µmole/h/W | 14 | 62 |
| Vitesse à 50% d'oxydation | | |
| - en µmole/h/W/g | 550 | 890 |
| - en µmole/h/W/m² | 420 | 680 |
| - en µmole.m²/h/W/g | 13 | 21 |
| - en µmole/h/W | 10 | 16 |

### Exemple 7 - abattement de l'acétone dans une enceinte fermée - influence du temps de résidence.

Dans la même enceinte de 450 litres qu'à l'exemple 6 mais en utilisant 2,7 g d'acétone (donc une concentration initiale de 2.300 ppmv), on place un réacteur de configuration similaire à celle du premier mode de réalisation de l'invention (exemple 2, figure 1) mais de dimensions différentes. Ce réacteur tubulaire en aluminium, dont la face intérieure présente une bonne réflectivité à la lumière, a un diamètre intérieur de 13 cm et une longueur de 90 cm. Deux tubes fluorescents de 20 W chacun sont positionnés axialement l'un derrière l'autre. 20 rondelles en papier de 11 cm de diamètre extérieur, percées en leur milieu à la dimension (26 mm) des tubes fluorescents et espacées de 4,5 cm, sont revêtues de TiO₂ conformément à la méthode de l'exemple 1 et supportent un poids total de catalyseur de 1.3 g. La vitesse moyenne des gaz est de 1.5 m/s, soit un temps moyen de résidence de 0.6 s. Dans ces conditions, il est aisé de calculer que l'indice de turbulence, défini par la formule I_{T} = Re* x N /(β x f), de cette configuration du réacteur est égal à 474.758 (à cet effet, on vérifiera d'abord que Re* = 12.737, β = 0,3 et f = 1,81).

Pour mémoire, la minéralisation totale de l'acétone correspond à l'équation suivante : CH₃COCH₃ + 4O₂ → 3CO₂ + 3H₂O

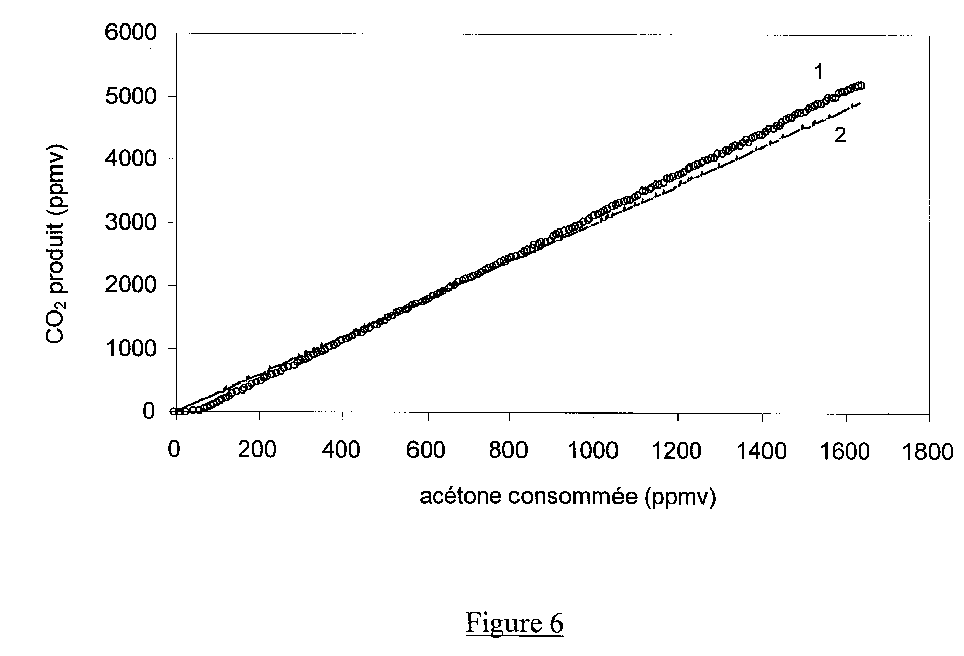

La figure 6 présente l'évolution expérimentale (courbe 1) de CO₂ produit (exprimé en ppmv) en fonction de l'acétone consommée (également exprimée en ppmv), par rapport à l'évolution théorique (courbe 2) résultant de cette équation et montre donc une minéralisation totale de l'acétone. La production de CO₂ légèrement supérieure à la valeur théorique en fin d'expérience s'explique par la présence de rondelles en papier qui se dégradent légèrement au contact avec TiO₂. Cet exemple illustre que la minéralisation complète de l'acétone est possible avec un temps de résidence suffisamment important dans le réacteur.

### Exemple 8 (comparatif) - épuration de l'acétone selon l'art antérieur

On utilise un réacteur conforme à l'exemple 4, possédant six ailettes ayant chacune une longueur de 25 cm (c'est-à-dire la longueur totale du réacteur) et une largeur de 1,25 cm, dont toute la surface interne (surface active exposée au rayonnement : 765 cm²) est couverte de dioxyde de titane (quantité totale : 100 mg) et équipé d'un ventilateur. Ce réacteur est placé dans l'enceinte de 450 litres de l'exemple 6 et mis en fonctionnement dans les conditions suivantes :
- quantité d'acétone : 2,6 g (concentration initiale de 2.220 ppmv)
- vitesse du gaz : 1,2 m/s.

Dans ces conditions, il est aisé de calculer que l'indice de turbulence, défini par la formule I_{T} = Re* x N /(β x f), de cette configuration du réacteur est égal à 1.588 (à cet effet, on vérifiera d'abord que Re* = 2.966 et f = 1,87 et on considère que N = 1 et β = 1, c'est-à-dire les ailettes n'induisent pas une réduction significative de la surface perpendiculaire à l'écoulement).

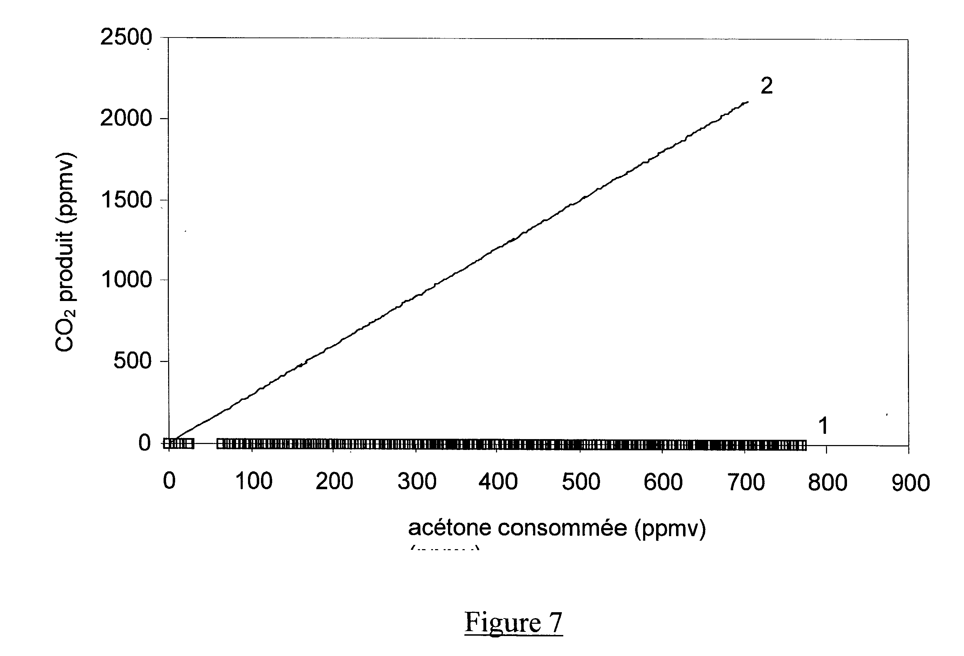

La figure 7 présente l'évolution expérimentale (courbe 1) de CO₂ produit (exprimé en ppmv) en fonction de l'acétone consommée (aussi exprimée en ppmv), par rapport à la production théorique (courbe 2) correspondant à une minéralisation complète selon l'équation précitée. Il montre donc que, contrairement au dispositif selon l'invention (exemple 7), le réacteur à ailettes est totalement inactif vis-à-vis de la minéralisation de l'acétone. Selon toute vraisemblance, l'acétone est alors simplement dégradée en formaldéhyde et acétaldéhyde ou bien reste fixée sur le catalyseur.

### Exemple 9 - influence de photocatalyseur sur la surface réfléchissante.

Un réacteur conforme à la configuration B de l'exemple 6 est étudié dans les conditions de cet exemple (0.65 g d'acétone dans 450 litres d'air, soit une concentration initiale de 555 ppmv), le temps de résidence moyen du gaz dans le réacteur étant de 0,18 s. A la différence de l'exemple 6 toutefois, le réflecteur de ce réacteur a été recouvert d'une très fine couche de TiO₂, correspondant à 3 mg pour 315 cm² de réflecteur.

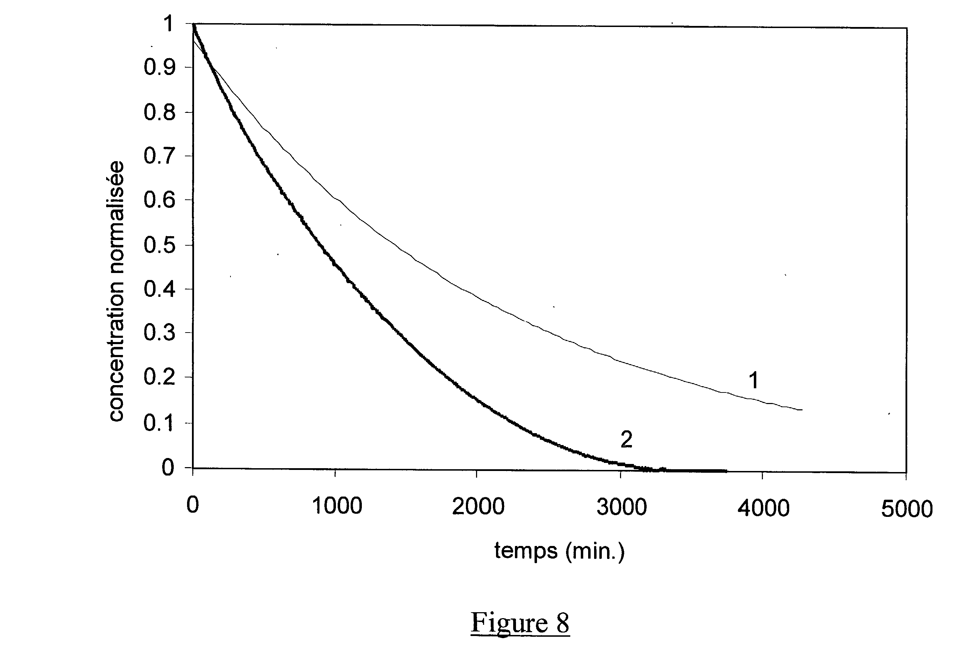

La figure 8 présente l'évolution de la dégradation de l'acétone (exprimée en concentration normalisée, c'est-à-dire en concentration relative par rapport à la concentration initiale) en fonction du temps pour le réflecteur non revêtu de catalyseur (courbe 1 déjà présentée sur la figure 5) par comparaison au réflecteur revêtu de catalyseur (courbe 2). On constate une amélioration spectaculaire de la performance du réacteur puisqu'une élimination totale de l'acétone est obtenue après 3200 minutes et qu'une élimination de 80% de l'acétone est obtenue après 1800 minutes en présence de catalyseur sur le réflecteur (au lieu de 3400 minutes en l'absence de catalyseur sur le réflecteur). Par ailleurs, aucune trace de produit intermédiaire n'est décelable dans la phase gazeuse lorsque tout l'acétone est consommée, indiquant une parfaite minéralisation de ce composé.

Le tableau 3 ci-après indique, selon les différents modes d'expression déjà précédemment utilisés, la vitesse de disparition de l'acétone à l'origine d'une part et après 80% d'oxydation d'autre part, exprimée en conditions standard.

Ces résultats montrent que le réflecteur revêtu d'une très fine couche de catalyseur permettant des reflexions multiples pour chaque rayon accroît la surface active exposée au rayonnement et induit une exploitation quasi-totale du rayonnement lumineux, optimisant ainsi l'utilisation de l'énergie lumineuse émise par le tube fluorescent ainsi que l'excitation du photocatalyseur.

**Tableau 3**

| Réflecteur | Non revêtu | Revêtu |
|---|---|---|
| Vitesse initiale | | |
| - en µmole/h/W/g | 3440 | 1970 |
| - en µmole/h/W/m² | 2630 | 750 |
| - en µmole.m²/h/W/g | 81 | 108 |
| - en µmole/h/W | 62 | 41 |
| Vitesse à 80% d'oxydation | | |
| - en µmole/h/W/g | 590 | 950 |
| - en µmole/h/W/m² | 450 | 845 |
| - en µmole.m²/h/W/g | 14 | 22 |
| - en µmole/h/W | 10,6 | 20 |

### Exemple 10 - influence de la présence de restrictions complémentaires dans le réacteur pour la dégradation de l'acétone.

Un réacteur conforme au second mode de réalisation de l'invention (exemple 3, figure 2), possèdant 15 rondelles revêtues de 18 mg de TiO₂, est installé dans l'enceinte de 450 litres de l'exemple 6 et mis en fonctionnement avec une quantité d'acétone de 0,66 g et un temps moyen de séjour de 0,62 s. Les parois et les chicanes de ce réacteur sont réalisées en matière réflective mais ne sont pas recouvertes de TiO₂.

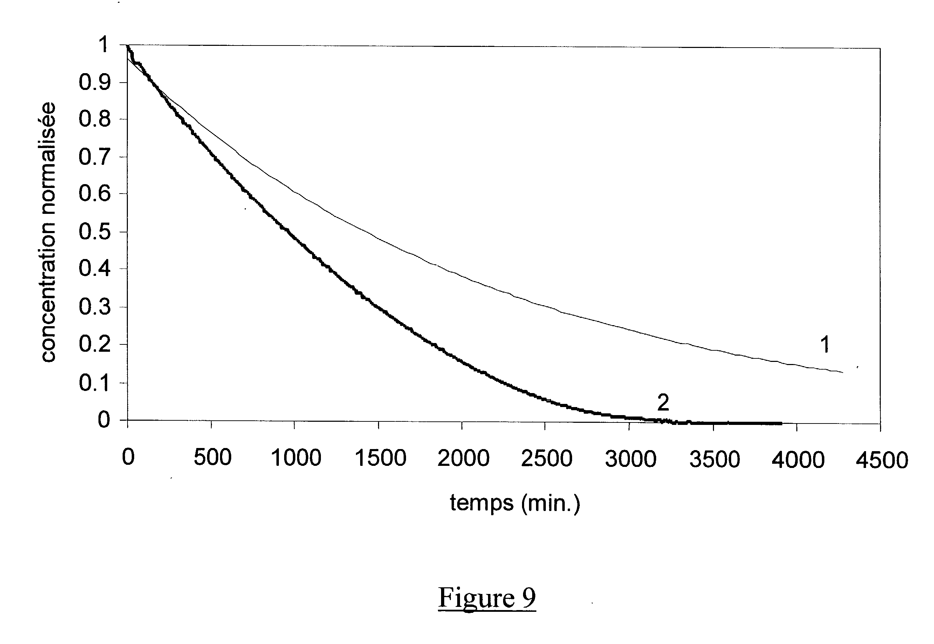

La figure 9 présente l'évolution de la dégradation de l'acétone (exprimée en concentration normalisée) en fonction du temps (courbe 2), comparée à celle de l'exemple 6 (courbe 1). La performance du réacteur est spectaculairement améliorée puisqu'une élimination totale de l'acétone est obtenue après 3300 minutes et qu'une élimination de 80% de l'acétone est obtenue après 1850 minutes seulement en présence de chicanes (au lieu de 3400 minutes en l'absence de chicanes). Le tableau 4 ci-après indique, selon différents modes d'expression, la vitesse de disparition de l'acétone à l'origine d'une part et après 80% d'oxydation (sans chicanes) ou bien 90% d'oxydation (avec chicanes) d'autre part, exprimée en conditions standard.

**Tableau 4**

| Configuration | avec chicanes | sans chicanes |
|---|---|---|
| Vitesse initiale | | |
| - en µmole/h/W/g | 1530 | 3440 |
| - en µmole/h/W/m² | 1170 | 2630 |
| - en µmole.m²/h/W/g | 36 | 81 |
| - en µmole/h/W | 28 | 62 |
| Vitesse à 90% d'oxydation | | |
| - en µmole/h/W/g | 1000 | 600(*) |
| - en µmole/h/W/m² | 765 | 457(*) |
| - en µmole.m²/h/W/g | 24 | 14(*) |
| - en µmole/h/W | 18 | 11(*) |

| | | |
|---|---|---|
| (*) vitesse à 80% d'oxydation après 3400 minutes d'illumination. | | |

### Exemples 11 et 12 - dégradation d'ammoniac

On effectue la dégradation photocatalytique d'ammoniac (en tant que polluant de l'air) dans un réacteur conforme au premier mode de réalisation de l'invention (exemple 2, figure 1) et en utilisant le montage de la figure 4 (c'est-à-dire un volume de 0,6 I). Le nombre N de rondelles, la quantité initiale de polluant (exprimée en µmoles) et la masse totale du catalyseur déposé sur les rondelles (exprimée en mg) sont mentionnés au tableau 5 ci-après. Le même tableau indique les résultats de ces expériences, à savoir la durée t (exprimée en minutes) après laquelle la quantité de polluant a été réduite de 90% dans les conditions standard, à partir de laquelle on calcule les différents modes d'expression de la vitesse avec laquelle 90% du polluant a été dégradé. Le catalyseur utilisé dans l'exemple 11 est le dioxyde de titane P25 de l'exemple 1. Le catalyseur utilisé dans l'exemple 12 est le TiO₂ sol-gel de l'exemple 5. Ces exemples montrent que l'ammoniac peut être épuré de l'air en employant de très faibles quantités de catalyseur et avec des vitesses très supérieures à celles observées pour l'acétone.

### Exemples 13 et 14 - dégradation d'isopropanol

On effectue la dégradation photocatalytique de l'isopropanol (en tant que polluant de l'air) dans un réacteur conforme au premier mode de réalisation de l'invention (exemple 2, figure 1) et en utilisant le montage de la figure 4, le catalyseur utilisé étant le dioxyde de titane P25 de l'exemple 1, en faisant varier le nombre N de rondelles et la masse catalytique. Les résultats de ces expériences sont indiqués au tableau 5 ci-après et montrent que l'isopropanol peut être épuré de l'air en employant de très faibles quantités de catalyseur et avec des vitesses très supérieures à celles observées pour l'acétone.

### Exemples 15 et 16 - dégradation d'éthylamine sous l'effet de rayonnement visible

On effectue la dégradation photocatalytique de l'éthylamine (en tant que polluant de l'air) dans un réacteur conforme au premier mode de réalisation de l'invention (exemple 2, figure 1) et en utilisant le montage de la figure 4, à l'exception du fait que le tube fluorescent UV est remplacé par une source de puissance 8 watts émettant la lumière visible et commercialisée par la société Sylvania sous la référence 133. Le catalyseur utilisé dans l'exemple 15 est le dioxyde de titane P25 de l'exemple 1. Le catalyseur utilisé dans l'exemple 16 est le TiO₂ sol-gel de l'exemple 5. Les résultats de ces expériences sont indiqués au tableau 5 ci-après et montrent que l'éthylamine peut être épurée de l'air sous l'effet de rayonnement visible en employant de très faibles quantités de catalyseur et avec des vitesses très supérieures à celles observées pour l'acétone.

**Tableau 5**

| Exemple | 11 | 12 | 13 | 14 | 15 | 16 |
|---|---|---|---|---|---|---|
| Polluant (µmole) | 2230 | 705 | 1290 | 1290 | 1770 | 885 |
| N rondelles | 10 | 10 | 6 | 12 | 10 | 10 |
| Catalyseur (mg) | 133 | 50 | 12 | 60 | 60 | 65 |
| t_{90%} (minutes) | 25 | 20 | 100 | 35 | 120 | 30 |
| Vitesse (90%) | | | | | | |
| - µmoles/h/W/g | 2415 | 2538 | 3870 | 2210 | 1660 | 3060 |
| - µmoles/h/W/m² | 20070 | 7930 | 4840 | 6910 | 6220 | 12400 |
| - µmoles/h/W/g/m² | 150900 | 158600 | 403000 | 115000 | 103700 | 191500 |
| - µmoles.m²/h/W/g | 39 | 41 | 37 | 42 | 27 | 49 |
| - µmoles/h/W | 357 | 141 | 52 | 148 | 111 | 221 |

### Exemples 17 à 20 - dégradation d'acétone en forte concentration

On effectue la dégradation photocatalytique de 1380 µmoles d'acétone en tant que polluant de l'air dans un réacteur conforme au premier mode de réalisation de l'invention (exemple 2, figure 1) et en utilisant le montage de la figure 4 (c'est-à-dire un volume de 0,6 litre, donc une concentration initiale d'acétone de 50.000 ppmv), le catalyseur utilisé étant le dioxyde de titane P25 de l'exemple 1 (pour les exemples 17 et 18) ou bien le TiO₂ sol-gel de l'exemple 5 (pour les exemples 19 et 20) , en faisant varier le nombre N de rondelles et la masse catalytique. Les résultats de ces expériences sont indiqués au tableau 6 ci-après.

### Exemples 21 et 22 - dégradation d'acétone en concentration modérée

On effectue la dégradation photocatalytique de 11190 µmoles d'acétone en tant que polluant de l'air dans un réacteur conforme au premier mode de réalisation de l'invention (exemple 2, figure 1), comportant 15 rondelles (supportant 18 mg de catalyseur au total) et un réflecteur recouvert de catalyseur, procurant une surface exposée à la lumière de 550 cm². Ce réacteur est placé dans l'enceinte de 450 litres de l'exemple 6 (donc la concentration initiale d'acétone est de 555 ppmv), le catalyseur utilisé étant le dioxyde de titane P25 de l'exemple 1. La quantité de catalyseur recouvrant le réflecteur est de 3 mg dans l'exemple 21 et de 250 mg dans l'exemple 22. Les résultats de ces expériences sont indiqués au tableau 6 ci-après.

**Tableau 6**

| Exemple | 17 | 18 | 19 | 20 | 21 | 22 |
|---|---|---|---|---|---|---|
| N rondelles | 6 | 11 | 6 | 18 | 15 | 15 |
| Catalyseur (mg) | 17 | 60 | 12 | 108 | 21 | 268 |
| t_{90%} (minutes) | 250 | 110 | 200 | 80 | 2300 | 1250 |
| Vitesse (90%) | | | | | | |
| - µmoles/h/W/g | 1170 | 750 | 2070 | 575 | 835 | 120 |
| - µmoles/h/W/m² | 2070 | 2560 | 2590 | 2150 | 318 | 585 |
| - µmoles/h/W/g/m² | 121700 | 42700 | 215600 | 20000 | 15200 | 2200 |
| - µmoles.m²/h/W/g | 11,2 | 13,2 | 20 | 16,6 | 46 | 6,6 |
| - µmoles/h/W | 22 | 50 | 28 | 69 | 19 | 36 |

## Revendications

1. Dispositif pour l'épuration d'un flux gazeux comprenant :
- un réacteur comprenant au moins une entrée pour le gaz à épurer et au moins une sortie pour le gaz épuré,
- au moins une source de rayonnement ultraviolet ou visible, et
- au moins un élément de support apte à être revêtu d'un catalyseur capable d'oxyder au moins partiellement les impuretés contenues dans le gaz sous l'action de rayonnement ultraviolet ou visible, ledit élément de support étant disposé à l'intérieur du réacteur,
**caractérisé en ce que** ledit (lesdits) élément(s) de support est (sont) disposé(s) par rapport à la source de rayonnement ultraviolet ou visible et/ou par rapport à la direction du flux gazeux de manière à permettre d'oxyder, en présence du catalyseur, 90% d'une impureté-modèle constituée d'acétone à une vitesse d'au moins 300 µmoles d'impureté-modèle par heure, par watt de puissance de la source et par mètre carré de surface d'élément de support illuminé par la source.

2. Dispositif pour l'épuration d'un flux gazeux comprenant
- un réacteur comprenant au moins une entrée pour le gaz à épurer et au moins une sortie pour le gaz épuré,
- au moins une source de rayonnement ultraviolet ou visible, et
- au moins un élément de support apte à être revêtu d'un catalyseur capable d'oxyder au moins partiellement les impuretés contenues dans le gaz sous l'action de rayonnement ultraviolet ou visible, ledit élément de support étant disposé à l'intérieur du réacteur,
**caractérisé en ce que** le réacteur est soumis à un régime turbulent d'écoulement du gaz à épurer **caractérisé par** un indice de turbulence, calculé selon la formule I_{T} = Re* N / β f dans laquelle
- Re* est un nombre exprimé par Re* = (4 ρ Vₘ S) / (P ν),
- β = s / S est un paramètre de porosité dont la valeur est égale à 1 si aucune restriction n'est présente à l'intérieur du réacteur,
- f est un facteur de friction correspondant au rapport de toutes les surfaces présentes dans le réacteur à la surface développée par le réacteur en l'absence de restriction(s), égal à Σ surfaces internes développées par le réacteur / surface d'un cylindre de périmètre P,
- S est la surface moyenne de la section orthogonale interne du réacteur en l'absence de restriction(s),
- ρ est la masse volumique du gaz à épurer,
- Vₘ est la vitesse moyenne du gaz à épurer parallèlement à l'axe du réacteur,
- P est la somme du périmètre interne moyen du réacteur et du périmètre externe moyen de la plus petite enveloppe géométrique comprenant la (les) source(s) de rayonnement,
- ν est la viscosité dynamique du gaz à épurer,
- N est le nombre de restrictions dans le réacteur ou bien, en l'absence de restrictions, est égal à 1, et
- s est la surface moyenne de l'ouverture définie par la section orthogonale interne du réacteur au maximum des restrictions,
au moins égal à 2.000.

3. Dispositif selon l'une des revendications 1 et 2, **caractérisé en ce que** l'élément de support est un élément plan ou quasi-plan réparti de manière discontinue dans la dimension longitudinale du réacteur.

4. Dispositif selon l'une des revendications 1 à 3, **caractérisé en ce que** l'élément de support est disposé de manière à assurer un écoulement turbulent du gaz à épurer pour favoriser le transport des impuretés à oxyder et/ou des produits d'oxydation de ces impuretés vers le catalyseur.

5. Dispositif selon l'une des revendications 1 à 4, **caractérisé en ce que** ledit élément de support est disposé perpendiculairement ou quasi-perpendiculairement à la direction principale du gaz à épurer telle que définie par l'entrée du gaz et la sortie du gaz, pour favoriser le transport des impuretés à oxyder et/ou des produits d'oxydation de ces impuretés vers le catalyseur.

6. Dispositif selon l'une des revendications 1 à 5, **caractérisé en ce qu'**il comprend en outre au moins une restriction disposée à l'intérieur du réacteur et orthogonale à l'axe du réacteur, ladite restriction étant le cas échéant revêtue d'un catalyseur capable d'oxyder au moins partiellement les impuretés contenues dans le gaz sous l'action de rayonnement ultraviolet ou visible.

7. Dispositif selon la revendication 6, **caractérisé en ce que** le nombre et la forme des restrictions sont choisis de manière à procurer un ralentissement de 10% à 90% du gaz à épurer par rapport à un réacteur sans restriction.

8. Dispositif selon l'une des revendications 6 et 7, **caractérisé en ce que** chaque restriction occupe, dans une section transversale du réacteur, plus du tiers de la section interne disponible au passage du gaz entre la paroi interne du réacteur et la source de rayonnement.

9. Dispositif selon l'une des revendications 1 à 8, **caractérisé en ce que** l'intérieur du réacteur est au moins partiellement garni d'une surface réfléchissante, ladite surface réfléchissante étant le cas échéant revêtue d'un catalyseur capable d'oxyder au moins partiellement les impuretés contenues dans le gaz sous l'action de rayonnement ultraviolet ou visible.

10. Dispositif selon la revendication 9, **caractérisé en ce que** la surface réfléchissante procure une réflexion du rayonnement ultraviolet ou visible supérieure à 20%.

11. Dispositif selon l'une des revendications 1 à 10, **caractérisé en ce qu'**il comprend en outre des moyens propres à assurer un écoulement turbulent du gaz à épurer dans le réacteur.

12. Procédé d'épuration d'un gaz utilisant un dispositif d'épuration conforme à l'une des revendications 1 à 11.
